# FASCICULE DE BREVET EUROPEEN

(11) **EP 4 276 517 B1**
(45) Date de publication et mention de la délivrance du brevet: **17.12.2025**
(21) Numéro de dépôt: 23172893.2
(22) Date de dépôt: 11.05.2023
(51) Int. Cl.: G02B 27/01, G02B 23/12, A42B 3/04

(54) **MODULE D'AFFICHAGE PORTÉ SUR TÊTE OU SUR CASQUE**
AM KOPF ODER AM HELM GETRAGENES ANZEIGEMODUL
HEAD-MOUNTED OR HELMET-MOUNTED DISPLAY MODULE

(30) Priorité: 12.05.2022 FR 2204491
(43) Date de publication de la demande: 15.11.2023
(73) Titulaire: THALES, 92190 Meudon (FR)
(72) Inventeur: BAUDOU, Joel, 33160 SAINT MEDARD EN JALLES (FR)
(74) Mandataire: Atout PI Laplace

(56) Documents cités:
- WO-A1-2020/160825
- US-A1- 2012 120 482
- US-A1- 2021 173 212
- US-A1- 2022 082 842
- ANONYMOUS: "New wearable Head-Up Display for business aviation aircraft, StandardAero and Thales sign agreement | Aerospace & Defense International Newspaper", 27 September 2019 (2019-09-27), XP093015956, Retrieved from the Internet <URL:https://aerodefenseinternational.com/new-wearable-head-up-display-for-business-aviation-aircraft-standardaero-and-thales-sign-agreement/> [retrieved on 20230120]
- SPUDMANWP: "Gentex Scorpion HMD", 30 July 2012 (2012-07-30), XP093016108, Retrieved from the Internet <URL:https://www.youtube.com/watch?v=EhNGkX7oWgE> [retrieved on 20230120]
- ATAC ROBERT ET AL: "Binocular Scorpion helmet-mounted display", HEAD- AND HELMET-MOUNTED DISPLAYS XVI: DESIGN AND APPLICATIONS, SPIE, 1000 20TH ST. BELLINGHAM WA 98225-6705 USA, vol. 8041, no. 1, 13 May 2011 (2011-05-13), pages 1 - 5, XP060014317, DOI: 10.1117/12.884547
- YANIK DOYON: "Thales TopMax 2019", 22 August 2019 (2019-08-22), XP093016102, Retrieved from the Internet <URL:https://www.youtube.com/watch?v=mlUrNxf95-o> [retrieved on 20230120]
- ANONYMOUS: "Stop-Motion-Linearf�hrungen", 12 December 2018 (2018-12-12), XP093016190, Retrieved from the Internet <URL:https://www.igus.eu/contentData/Product_Files/Download/pdf/drylin_Lineartechnik_drylin_Stop_Motion.pdf> [retrieved on 20230120]

## Description

Le domaine technique de l'invention est celui des systèmes de visualisation pour pilotes d'aéronef. Plus précisément, le domaine de l'invention est celui des systèmes combinant, à la fois, des jumelles et un viseur ou un visuel de tête.

Un système de visualisation peut comporter trois équipements de visualisation différents. Il s'agit d'une visière de protection, d'un viseur ou d'un visuel de tête et des jumelles qui peuvent être des jumelles de vision nocturne. Dans la suite de la description, on parlera de visuel de tête pour désigner indistinctement un viseur de casque ou un visuel de tête. On utilisera également l'acronyme « JVN » pour désigner les jumelles de vision nocturne.

Les jumelles de vision nocturne captent la luminosité des objets dans le proche infrarouge et restituent une image visible grâce à des dispositifs d'intensification de lumière. Elles comportent deux corps identiques. Chacun des corps comportent trois parties principales qui sont un objectif, le dispositif à intensificateur de lumière et un oculaire. Le champ visuel des JVN donné par l'oculaire a généralement un diamètre de 40 degrés. Pour voir la totalité de l'image intensifiée, l'oculaire des JVN se place généralement à 25 millimètres environ de l'œil.

Un visuel de tête présente une image synthétique ou vidéo collimatée à l'infini en superposition sur l'extérieur au moyen d'une optique de projection et d'un combineur ou mélangeur optique. L'image provient généralement d'un écran plat comportant une source d'éclairage et sa carte électronique de pilotage. L'optique de projection assure la collimation de l'image diffusée dans le combineur. Pour réduire les dimensions de cet élément, on utilise des combineurs à expansion de pupille. Le combineur est alors une lame optique constituée d'une pluralité de prismes réfléchissant vers l'œil la lumière de l'image synthétique.

Actuellement, certaines missions de surveillances ne nécessitent pas obligatoirement l'utilisation d'un casque de protection rigide et un simple bandeau ou serre-tête, plus léger, peut être utilisé, afin de libérer la tête de l'opérateur du poids du casque de protection. A titre d'exemple, dans le cas d'une mission de surveillance maritime, pouvant durer plusieurs heures, pour laquelle un opérateur est à bord d'un avion, d'un hélicoptère, ou dans un aéronef quelconque, ce dernier passe un temps considérable à observer la surface de la mer, l'équipage, dont l'opérateur, est équipé uniquement d'un serre-tête ou d'un bandeau rigide afin de se passer d'un lourd casque de protection.

Afin de supporter l'opérateur dans sa surveillance, un dispositif d'affichage des informations devant l'œil peut être fixé au bandeau ou au serre-tête de sorte à présenter les informations essentielles à la conduite d'une mission de surveillance. Or, les JVN sont trop lourdes et volumineuses pour être installées sur un bandeau ou un serre-tête et sont généralement fixées sur les casques de protection rigides. De plus, les informations liées à l'aéronef et aux conditions de vol sont généralement affichées sur des écrans en cockpit ou en cabine.

Dès lors, lorsque la nuit tombe, l'opérateur doit remplacer le bandeau ou le serre-tête par un casque de protection afin de poursuivre la surveillance de nuit. Cependant, ce dernier se trouve alors dans l'obligation de baisser la tête en direction des écrans du cockpit de sorte à avoir les informations essentielles sur son environnement, sur l'aéronef etc. Or, l'alternance entre la surveillance du milieu extérieur et l'observation des écrans du cockpit, nécessitant à l'opérateur de baisser la tête, nuit à la perception de la situation de l'opérateur en diminuant le temps passé par l'opérateur à la surveillance du milieu extérieur. En outre, cette alternance fatigue aussi grandement l'opérateur ce qui nuit également à la bonne tenue de sa mission de surveillance.

Outre la nuit, chaque variation de la luminosité peut induire à un remplacement du dispositif d'affichage par des jumelles ou inversement. De manière similaire, la topologie et la géographie de l'environnement peut obliger l'opérateur, pendant sa surveillance, à remplacer le dispositif d'affichage par des jumelles ou inversement. En effet, lorsque l'environnement au sol est une étendue uniforme, un dispositif d'affichage semble suffire. Néanmoins, lorsque du relief est observable sur l'environnement au sol, les jumelles semblent plus appropriées et un remplacement du dispositif d'affichage et du serre-tête par des jumelles et le casque les supportant peut s'imposer.

Dès lors, le remplacement du serre-tête ou du bandeau rigide supportant le dispositif d'affichage par le casque supportant les jumelles (JVN ou autre) et inversement se produit au moins une fois, et très souvent plusieurs fois, lors de la surveillance de l'opérateur. Ces multiples changements représentent alors une durée non négligeable pendant laquelle l'opérateur ne peut pas effectuer sa surveillance. Ces multiples changements génèrent également de la fatigue supplémentaire pour l'opérateur pendant une surveillance qui peut durer longtemps.

Le document US 2021/173212 A1 décrit un dispositif d'affichage détachable comportant un combineur, un boîtier scellé, et une interface amovible compatible avec plusieurs supports crâniens. Il présente un affichage en superposition avec l'environnement extérieur, monté sur un support crânien au moyen d'une interface à géométrie variable. Il ne divulgue pas d'interface de fixation de jumelles ni de configuration optique où le combineur est interposé entre l'œil et les jumelles. Le document US 2012/0120482 A1 montre un affichage monté sur casque avec accessoires amovibles via une plaque de base. Le document WO 2020/160825 A1 divulgue un affichage monté sur casque et jumelles montées séparément. Le document XP093015956 concerne un dispositif d'affichage amovible monté sur un bandeau par rail latéral. Le document XP093016108 montre un afficheur monté sur casque via une interface de type banana bar.

**De** plus, l'utilisation combinée d'un bandeau ou serre-tête pour le jour et d'un casque avec des JVN la nuit augmente grandement l'encombrement au poste de l'opérateur.

L'invention vise à pallier tout ou partie des problèmes cités plus haut en proposant un visuel de casque amovible avec fixations compatibles du montage sur un casque ou un bandeau serre-tête et d'un volume compatible de jumelles.

Plus précisément, l'invention propose donc un système de visualisation comportant des équipements de visualisation amovibles tels qu'un dispositif d'affichage ou des JVN qui peuvent être fixés sur un casque de protection rigide ou sur un bandeau rigide ou un serre-tête.

A cet effet, l'invention a pour objet un système de visualisation destiné à coopérer avec un support crânien, ledit système de visualisation comprenant :
- un dispositif d'affichage détachable, comprenant :
   ∘ un combineur, disposé devant un œil de l'utilisateur, apte à présenter des informations en superposition avec une vision extérieure,
le système de visualisation comprenant une interface de montage amovible, configurée pour associer le dispositif d'affichage à une pluralité de supports crâniens parmi au moins un casque, un bandeau et un arceau serre-tête.

Le dispositif d'affichage détachable comprend une interface de fixation de support des jumelles, le système de visualisation comprend des jumelles détachables, les jumelles comprennent un support de jumelles, apte à être fixé contre le dispositif d'affichage par association mécanique de l'interface de fixation de support de jumelles et du support de jumelles de sorte à ce que le dispositif d'affichage se trouve entre l'œil de utilisateur et les jumelles.

Selon un aspect de l'invention, l'interface de montage amovible comprend :
- un premier système de fixation monté sur l'interface de montage amovible,
- un deuxième système de fixation complémentaire du premier système de fixation, monté sur le support crânien,
le premier système de fixation étant configuré pour être associé avec le deuxième système de fixation de sorte à encastrer le premier système de fixation.

Selon un aspect de l'invention, le premier système de fixation comprend un système de glissière et le deuxième système de fixation comprend une rainure en T.

Selon un aspect de l'invention, le système de glissière comprend un dispositif de crantage et la rainure en T comprend un système de poussoir à billes.

Selon un aspect de l'invention, la rainure en T est mobile en rotation selon un axe transversal dont une composante est perpendiculaire à un champ visuel de l'utilisateur.

Selon un aspect de l'invention, le deuxième système de fixation est mobile en rotation selon un deuxième axe parallèle au champ visuel de l'utilisateur.

Selon un aspect de l'invention, le système est destiné à être associé à un casque, le casque comprenant une plaque d'adaptation connectée au deuxième système de fixation et à l'interface de fixation de support de jumelles, le dispositif d'affichage et les jumelles étant mobiles en translation par rapport à la plaque d'adaptation du casque selon un axe vertical perpendiculaire à l'axe transversal et au deuxième axe de champ visuel.

Selon un aspect de l'invention, le dispositif d'affichage comprend un premier pôle d'aimants, le système de visualisation comprend une visière mobile, la visière mobile comprend un deuxième pôle d'aimants complémentaire du premier pôle d'aimants, magnétiquement connecté au premier pôle d'aimants de sorte à maintenir la visière mobile en contact du dispositif d'affichage.

Selon un aspect de l'invention, l'interface de montage amovible comprend :
- un premier système de fixation monté sur l'interface de montage amovible,
- un deuxième système de fixation complémentaire du premier système de fixation, destiné à être monté sur le support crânien,
le premier système de fixation étant configuré pour être associé avec le deuxième système de fixation de sorte à encastrer le premier système de fixation, le système de visualisation étant destiné à être associé à un casque, le casque comprenant une plaque d'adaptation connectée au deuxième système de fixation du dispositif d'affichage, la visière amovible comprenant une platine de fixation connectée à la plaque d'adaptation du casque.

Selon un aspect de l'invention, les jumelles sont des jumelles de vision de nuit comportant deux corps identiques, chaque corps comportant un oculaire.

Selon un aspect de l'invention, le dispositif d'affichage comprend un écran plat d'affichage, sa source d'éclairage, une optique de collimation et un combineur optique à expansion de pupille.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente un système de visualisation selon l'invention coopérant avec un serre tête ;
[Fig.2] la figure 2 représente le système de visualisation selon l'invention coopérant avec un casque de protection ;
[Fig.3] la figure 3 représente un dispositif d'affichage selon l'invention ;
[Fig.4] la figure 4 représente un système de fixation double du dispositif d'affichage afin de coopérer avec le serre-tête ;
[Fig.5] la figure 5 représente le système de visualisation de la figure 2 coopérant avec le serre-tête selon une deuxième configuration ;
[Fig.6] la figure 6 représente un système de gestion de la hauteur du dispositif d'affichage sur un casque ;
[Fig.7] la figure 7 représente le système de fixation double du dispositif d'affichage coopérant avec le casque de protection ;
[Fig.8] la figure 8 représente le système de visualisation de la figure 1 selon une deuxième configuration ;
[Fig.9] la figure 9 représente le système de visualisation comportant une visière solaire coopérant avec un casque de protection ;

Par souci de clarté, les mêmes éléments porteront les mêmes repères dans les différentes figures.

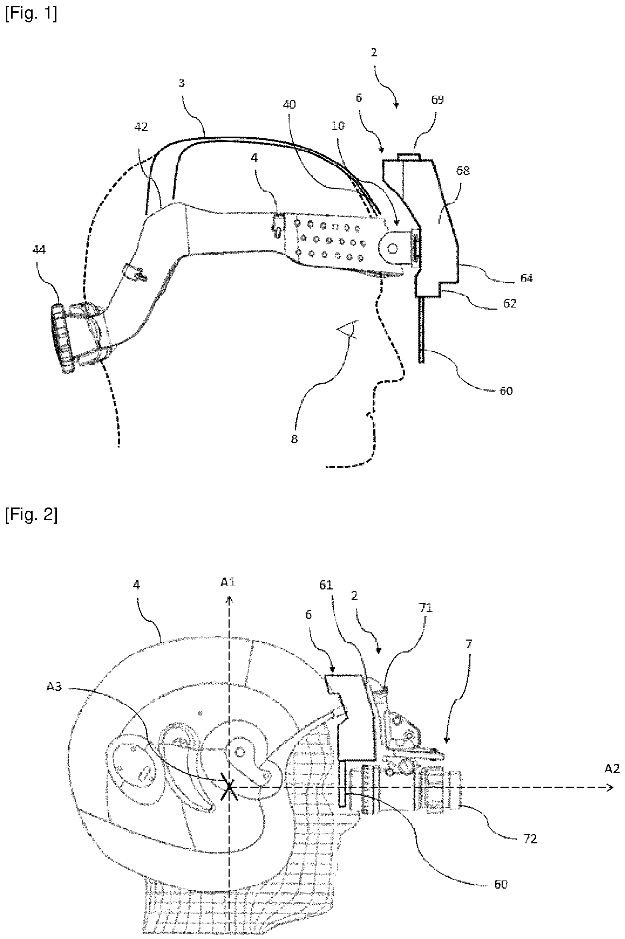

La figure 1 représente un système de visualisation 2 selon l'invention destiné à coopérer avec un support crânien 4. Le support crânien 4 est défini comme un support comprenant une armature rigide qui repose sur le crâne d'un utilisateur. A titre d'exemple indicatif, le support crânien 4 est un casque de protection, un serre-tête ou un bandeau. Dans la suite de la description de la figure 1, le support crânien 4 est un serre-tête. Le système de visualisation 2 comprend un dispositif d'affichage 6 détachable du support crânien 4. Le dispositif d'affichage 6 comprend un combineur 60, disposé devant un œil 8 de l'utilisateur portant le support crânien 4 et le système de visualisation 2. Le combineur 60 est apte à présenter des informations devant l'œil 8 en superposition avec une vision extérieure.

Le système de visualisation 2 comprend également une interface de montage 10 amovible, configurée pour associer le dispositif d'affichage 6 à une pluralité de supports crâniens 4 parmi au moins un casque, un bandeau et un arceau serre-tête. Préférentiellement, le support crânien 4, et particulièrement le bandeau et le serre-tête, est un support rigide, c'est-à-dire que la structure du support crânien 4 est assez rigide pour supporter au moins le dispositif d'affichage 6 et d'autres équipements visuels. Ainsi, le support crânien peut être tout autre support reposant sur le crâne de l'opérateur et ayant une rigidité suffisante pour supporter des équipements visuels. En effet, le système de visualisation 2 présente l'avantage de pouvoir être associé à un bandeau ou un serre-tête comme représenté en figure 1 et, lorsque la nuit prend place, d'être détaché du support crânien 4 utilisé, à savoir le serre-tête, et d'être ensuite associé à un autre support crânien 4, de structure différente du serre-tête, comme par exemple un casque, représenté en figure 2, équipé de JVN permettant à l'opérateur d'observer la nuit. Ainsi, l'équipement visuel, à savoir le dispositif d'affichage 6, est détachable et compatible avec tous les supports crâniens embarqués par l'opérateur de sorte à permettre à l'opérateur de ne pas s'encombrer avec plusieurs équipements visuels identiques sur des supports crâniens différents.

Dès lors, l'opérateur a à sa disposition un moyen de montage, à savoir l'interface de montage amovible 10, permettant au dispositif d'affichage 6 d'être monté sur un casque ou sur un arceau et permettant de passer d'un arceau ou d'un serre-tête à un casque en vol.

Le serre-tête 4 comprend, de manière optionnelle, une sangle 3 reliant une face frontale 40 du serre-tête 4 à une face arrière 42 du serre-tête 4 de sorte à améliorer le positionnement du serre-tête 4 sur le crâne de l'opérateur.

Le serre-tête 4 comprend également un moyen de lestage 44 du serre-tête 4 positionné à l'arrière du crâne de l'opérateur par rapport à son champ visuel permettant de compenser le poids à l'avant du serre-tête 4 induit par le positionnement du dispositif d'affichage 6 et d'obtenir ainsi un équilibre sur le crâne de l'opérateur. Dès lors, la masse du moyen de lestage 44 est au moins équivalente à la masse du dispositif d'affichage 6. A titre d'exemple indicatif, le moyen de lestage 44 a une masse d'environ 200 grammes.

En outre, le moyen de lestage 44 est également un moyen de réglage du serre-tête 4 pour l'adapter à la morphologie de la tête. L'appui au niveau de la nuque participe au maintien et à la stabilité de l'ensemble du serre-tête 4 sur la tête. Le serre-tête 4 est lesté pour compenser la masse installée sur le devant.

Le dispositif d'affichage 6 comprend un écran plat d'affichage, sa source d'éclairage ainsi que de l'électronique de commande 68, une optique de collimation 62, un imageur 64 intégrant la source d'éclairage et le combineur 60 optique à expansion de pupille.

L'optique de collimation 62 et l'imageur 64 sont situés dans la partie basse du dispositif d'affichage 6 et l'électronique de commande 68 est positionnée dans la partie haute du dispositif d'affichage 6.

Le dispositif d'affichage comprend, selon une variante, un capteur de position 69 situé dans la partie haute permettant de détecter le bon positionnement du dispositif d'affichage 6.

La connexion directe entre le dispositif d'affichage 6 et le capteur de position 69 présente ainsi l'avantage d'avoir un asservissement en temps réel du positionnement et automatique du dispositif d'affichage 6 afin de correspondre parfaitement au champ visuel de l'opérateur. Autrement dit, le dispositif d'affichage 6 comprenant le capteur de position 69 ne nécessite pas de reprise d'alignement de l'afficheur sur les informations du capteur après échange en vol.

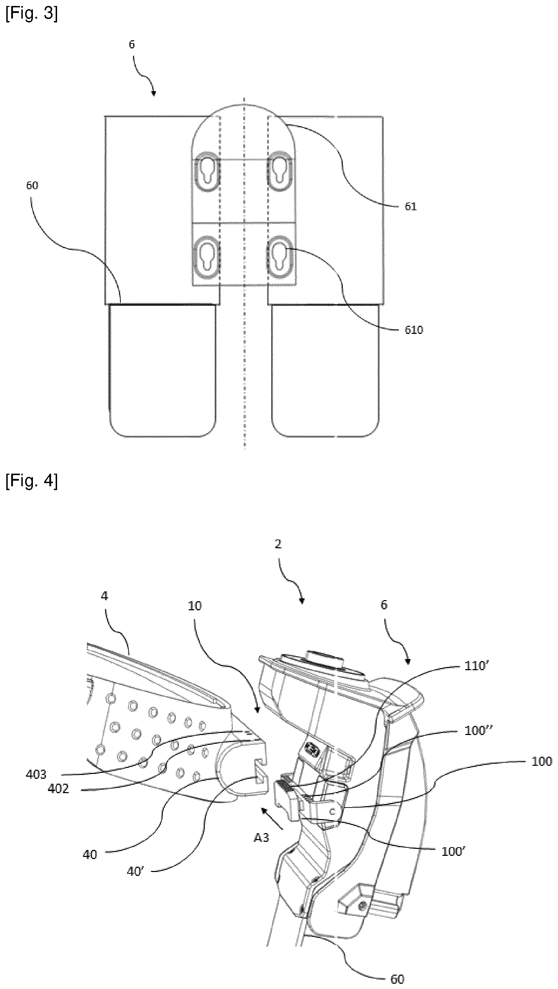

Le dispositif d'affichage 6 détachable comprend également une interface de fixation de support de jumelles 61, représenté en figure 2 (et de façon plus précise en figure 3). En effet, lorsque la nuit est tombée, l'opérateur doit retirer le serre-tête afin de changer de support crânien 4 afin d'utiliser des jumelles 7. Dès lors, le support crânien 4 devient, dans le cas de la description de la figure 2, un casque 4 de protection. Le système de visualisation 2 comprend alors des jumelles 7 telles que des jumelles à vision nocturne ou JVN détachables associées au casque 4. Les jumelles 7 comprennent un support de jumelles 71, apte à être fixé contre le dispositif d'affichage 6 par association mécanique de l'interface de support de jumelles 61 et du support de jumelles 71 de sorte à ce que le dispositif d'affichage 6 se trouve entre un œil 8 de l'opérateur et les jumelles 7. Ainsi, le dispositif d'affichage 6 est fixé contre le casque 4, par l'intermédiaire de l'interface de montage amovible 10, de sorte à ce que le combineur 60 présente des informations devant l'œil 8 de l'opérateur en superposition avec une vision extérieure fournie par l'intermédiaire des jumelles 7, fixées contre le dispositif d'affichage 6.

D'autres types de jumelles peuvent être envisagés à la place des JVN. Les jumelles 7 comportent deux corps identiques, chaque corps comportant un oculaire 72. Plus précisément, lorsque les jumelles 7 sont des JVN, chaque corps de jumelles comporte, dans cet ordre, un objectif, un dispositif amplificateur de lumière de l'image donnée par l'objectif et l'oculaire 72 formant de l'image intensifiée une image à l'infini. Les jumelles 7 sont installées avec l'oculaire 72 au contact du combineur 60 afin de respecter la distance permettant à l'œil de voir tout le champ de l'image intensifiée. On comprend par « en contact » que les jumelles 7 sont au plus près du combineur 60, le contact direct n'étant pas obligatoire. Les jumelles 7 sont réglées en latéral devant l'œil grâce à leur mécanisme de réglage interoculaire et sont disposées au centre de la partie utile du combineur 60 en vertical par le support de jumelles 71.

Afin d'augmenter l'espace disponible entre le casque 4 et les jumelles 7, des réglages sur les jumelles peuvent être envisagés comme par exemple un réglage longitudinal des jumelles 7 de sorte à permettre un décalage des jumelles 7 et du support de jumelles 71 selon un deuxième axe A2 parallèle au champ de vision de l'opérateur. Il peut également être envisagé d'effectuer un réglage vertical des jumelles permettant aux jumelles d'être décalées selon un axe vertical A1, perpendiculaire au deuxième axe A2 de champ visuel, ou encore d'effectuer un réglage autour d'un troisième axe transversal A3 perpendiculaire au deuxième axe A2 de champ visuel (ou dont une composante est perpendiculaire au deuxième axe A2 de champ visuel) et perpendiculaire à l'axe vertical A1. L'espace libéré par ces trois réglages permet ainsi de définir la profondeur disponible pour le positionnement du dispositif d'affichage 6 entre l'œil 8 de l'opérateur et les jumelles 7.

Le dispositif d'affichage 6 est monoculaire et préférentiellement est positionné devant l'œil dominant de l'opérateur. En variante, le dispositif d'affichage 6 est binoculaire, comme représenté en figure 3, de sorte à présenter de manière avantageuse une plus grande quantité d'information à l'opérateur. La largeur maximale du dispositif d'affichage 6, et particulièrement du combineur 60, selon l'axe transversal A3, est définie par l'installation d'un dispositif d'affichage 6 sur chaque œil et la nécessité de réserver un espace proche du plan sagittal, plan formé par l'axe vertical A1 et le deuxième axe A2 de champ visuel, pour l'interface de fixation de support de jumelles 61.

L'interface de fixation de support de jumelles 61 comprend un nombre défini d'encoches 610, quatre encoches 610 dans l'exemple de la figure 3, permettant l'insertion d'une tête de vis en provenance du support de jumelle 71. Dès lors, une translation vers le combineur 60, parallèlement à l'axe vertical A1, permet le verrouillage de chaque tête de vis dans les encoches 610 respectives. Le support de jumelles 71 est alors encastrée contre l'interface de fixation de support de jumelle 61 et donc contre le dispositif d'affichage 6. A titre d'exemple indicatif, les encoches 610 peuvent être des boutonnières rigides.

A titre d'exemple indicatif, l'interface de fixation de support de jumelles 61 peut être une pièce de fixation connue des jumelles sur un casque de protection.

Afin de permettre la fixation rapide et aisée du dispositif d'affichage 6 sur un quelconque support crânien 4, l'interface de montage amovible 10 comprend comme représenté en figure 4 :
- un premier système de fixation 100 monté sur l'interface de montage amovible 10,
- un deuxième système de fixation 40 complémentaire du premier système de fixation 100, monté sur le support crânien 4, à savoir le casque ou le bandeau rigide ou l'arceau serre-tête rigide.

Le premier système de fixation 100 est configuré pour être associé avec le deuxième système de fixation 40 de sorte à encastrer le premier système de fixation 100. Le premier système de fixation 100 et le deuxième système de fixation 40 complémentaire peuvent être tout système de fixation mâle et femelle permettant un encastrement du dispositif d'affichage 6. A titre d'exemple, le premier système de fixation 100 peut être inséré dans le deuxième système de fixation 40 et verrouillé dans le deuxième système de fixation 40 par l'intermédiaire d'une troisième pièce empêchant un mouvement de retour du premier système de fixation 100.

Plus précisément, le premier système de fixation 100 est amovible et détachable du deuxième système de fixation 40 complémentaire qui est, quant à lui, fixé contre le support crânien 4.

Selon une configuration préférentielle, représentée en figure 4, le premier système de fixation 100 comprend un système de glissière 100' et le deuxième système de fixation 40 comprend une rainure en T 40', de dimension complémentaire, permettant le coulissage du système glissière.

Afin d'associer le dispositif d'affichage 6 sur le support crânien 4, un serre-tête dans le cas représenté en figure 4, le système de glissière 100' est inséré parallèlement à l'axe transversal A3 dans la rainure en T 40'. Le système de glissière 100' comprend également un dispositif de crantage 110' et la rainure en T 40' comprend un système de poussoir à billes 403 permettant d'immobiliser le système glissière 100' dans la rainure en T 40'. Comme représenté en figure 4, deux systèmes de poussoir à billes 403 suffisent à verrouiller le système de glissière 100'. En variante, plus de deux systèmes de poussoir à billes 403 peuvent être envisagés. Selon une autre variante, un seul poussoir à bille 403 suffit à verrouiller le système avec un ressort suffisamment raide.

Le deuxième système de fixation 40 comprend également un marqueur visuel 402 de sorte à centrer le système de glissière 100' par rapport à l'œil de l'opérateur, le marqueur visuel 402 pouvant être aligné avec des indicateurs visuels 100" présents sur le premier système de fixation 100 de sorte à positionner latéralement le dispositif d'affichage 6 par rapport à l'œil de l'opérateur.

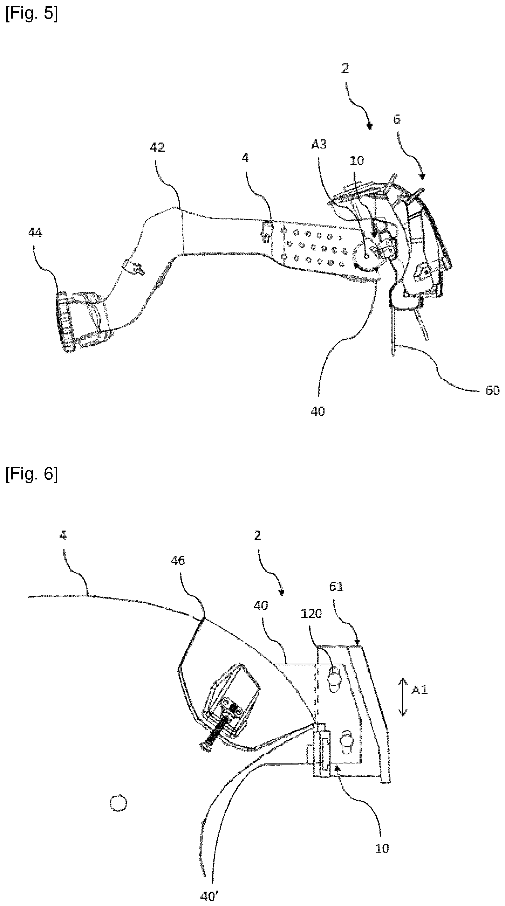

En outre, la rainure en T 40' est mobile en rotation selon l'axe transversal A3 perpendiculaire au champ visuel de l'opérateur. Cette mobilité en rotation présente l'avantage de permettre une rotation du dispositif d'affichage 6 et d'ainsi pivoter le dispositif d'affichage 6 de sorte à ne plus avoir le combineur 60 devant l'œil et dégager au moins partiellement la vision de l'opérateur, lors de vol où la présence du dispositif d'affichage 6 est facultative comme représenté en figure 5. Cette rotation présente également l'avantage de permettre de faciliter la mise en place ou le retrait du combineur 60 sur le crâne de l'opérateur.

Selon une variante, le système de glissière 100' est inséré parallèlement à l'axe vertical A1 dans la rainure en T 40', elle-même positionnée parallèlement à l'axe vertical A1. Cette configuration permet ainsi de verrouiller le dispositif d'affichage par l'intermédiaire de son propre poids. Néanmoins, cette configuration empêche tout pivotement du dispositif d'affichage 6 qui reste alors devant l'œil de l'opérateur.

En variante, toute rainure permettant l'insertion par coulissage ainsi que le verrouillage de la glissière peut être envisagée.

De plus lorsque le support crânien 4 est un bandeau ou un serre-tête, comme représenté en figure 5, l'ajustement en hauteur du combineur 60 devant l'œil de l'opérateur se fait par le déplacement du support crânien 4 parallèlement à l'axe vertical A1.

A l'inverse, lorsque le support crânien 4 est un casque, comme représenté en figure 6, le dispositif d'affichage 6 peut également être ajusté en hauteur devant l'œil de l'opérateur. En effet, le dispositif d'affichage 6, ainsi que les jumelles 7, sont mobiles en translation par rapport au casque selon l'axe vertical A1 perpendiculaire à l'axe transversal et au deuxième axe de champ visuel de l'opérateur. Pour ce faire, l'interface de montage amovible 10 comprend un système de crantage supplémentaire 120 monté par exemple sur le deuxième système de fixation 40 permettant de faire varier la hauteur du premier système de fixation 100.

Il peut également être envisagé que le casque comprenne une plaque d'adaptation, fixée sur le casque ou intégrée au casque, connectée au deuxième système de fixation 40 et au support de fixation de jumelles 61. Dès lors, le dispositif d'affichage 6 et les jumelles 7 sont également mobiles en translation par rapport à la plaque d'adaptation du casque selon l'axe vertical A1. Il peut également être envisagé que le casque 4 comprenne un arceau 46 reposant contre le casque 4. Dès lors, la plaque d'adaptation repose contre l'arceau 46. L'arceau 46 est, de préférence, de la même matière que la coque du casque 4. La plaque d'adaptation peut faire partie intégrante de l'arceau 46 ou y être fixée à demeure.

Ainsi, l'invention concerne le système de visualisation 2 et le support crânien 4, à savoir le casque dans le cas de la figure 6, comprenant la plaque d'adaptation et/ou l'arceau 46 dans lequel les jumelles 7, et plus particulièrement l'interface de fixation de support de jumelles 61, possèdent une mobilité en translation par rapport à la plaque d'adaptation et par rapport à l'arceau 46 et le casque 4 selon l'axe vertical A1.

La plaque d'adaptation est, à titre d'exemple indicatif, une plaque d'adaptation connue dans le domaine des casques de protection en aéronautique. De manière similaire, l'arceau 46 est également un arceau métallique connu du domaine des casques de vol. La plaque d'adaptation et l'arceau 46 peuvent être formés d'une même pièce, comme représenté en figure 6. L'arceau peut être, à titre d'exemple, un arceau « Banana Bar » ou « Banana Ski ». Cet arceau comporte une surface adaptée à la fixation « définitive » du support de jumelles 71 ou à l'interface de fixation de support de jumelles 61 pour un montage rapide du support de jumelles 71.

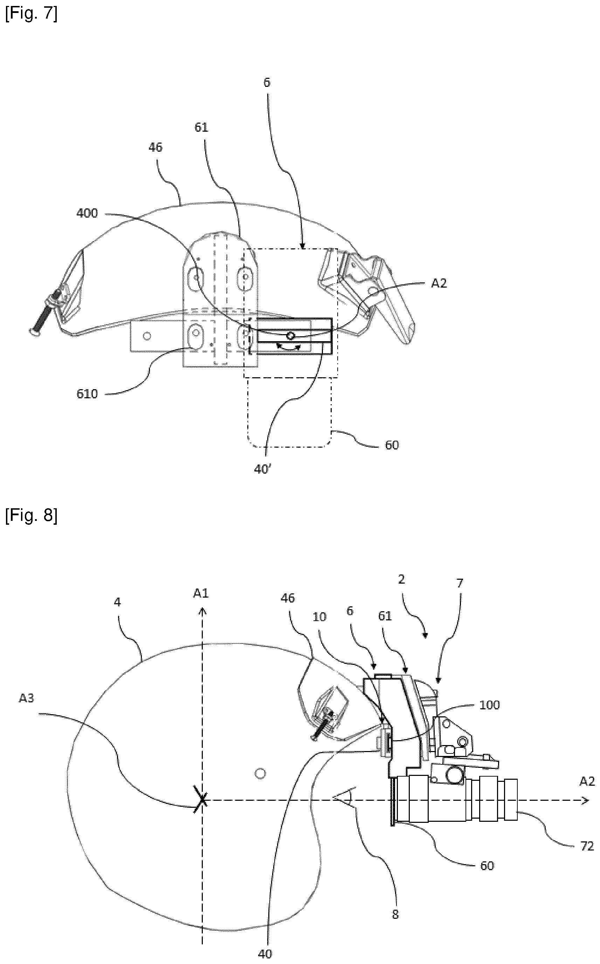

En outre, le dégagement du dispositif d'affichage 6 et particulièrement du combineur 60 pour, par exemple, la mise en place du casque 4 ne peut se faire vers l'avant, dans la direction du deuxième axe A2 de champ visuel à cause de la présence de jumelles 7 et de la proximité avec le casque 4. Ainsi, comme représenté en figure 7, le deuxième système de fixation 40 est mobile en rotation selon le deuxième axe A2 de champ visuel de l'opérateur. Plus précisément, la rainure en T 40' est apte à pivoter selon un pivot 400 parallèlement au deuxième axe A2 de champ visuel entraînant avec elle le premier système de fixation 100. Le dégagement est alors réalisé par une rotation latérale opposée au plan sagittal, autour du pivot 400 de sorte à écarter le combineur 60 de l'œil de l'opérateur et des jumelles 7.

Comme indiqué précédemment, le combineur 60 étant installé du côté de l'œil dominant de l'opérateur, le pivot 400 est également installé du côté de l'œil dominant. Il peut également être envisagé, dans le cas d'utilisation de deux combineurs 60, d'avoir deux pivots 400, un pivot 400 par rainure en T 40'. Le pivot 400 est positionné entre le casque 4 et la rainure en T 40'. Si le casque 4 comprend un arceau 46 ou une plaque d'adaptation comme dans la figure 7, le pivot 400 est positionné entre la plaque d'adaptation et la rainure en T 40'.

La figure 8 présente ainsi le système de visualisation 2 dans lequel l'interface de montage amovible 10 comprend le premier système de fixation 100 monté sur l'interface de montage amovible 10 et le deuxième système de fixation 40 complémentaire du premier système de fixation 100, lui-même encastré dans le deuxième système de fixation 40, monté cette fois sur l'arceau 46.

Lorsque le système de visualisation 2 est destiné à être associé à un casque 4 et que le casque 4 comprend l'arceau 46 et/ou la plaque d'adaptation, la plaque d'adaptation, ou l'arceau 46 lorsque le casque 4 ne comprend pas de plaque d'adaptation, est connecté(e) au deuxième système de fixation 100 du dispositif d'affichage 6.

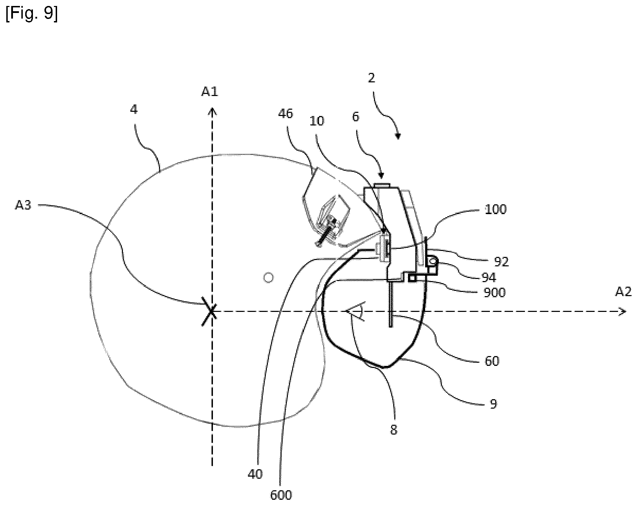

En outre, lorsque les jumelles 7 ne sont pas utiles mais que le casque 4 est nécessaire ou simplement souhaité par l'opérateur, il peut être envisagé de retirer les jumelles 7 du casque 4, comme représenté en figure 9, et simplement de fixer le dispositif d'affichage 6 sur le casque 4. Or, de jour par exemple, il peut être envisagé de protéger l'œil 8 de l'opérateur de la luminosité extérieure ou de toute autre nuisance visuelle pour l'opérateur, comme les poussières et particules. Ainsi, il peut être envisagé d'utiliser, selon une variante représentée en figure 9, une visière mobile 9 permettant de protéger l'œil de l'opérateur.

Dès lors, le système de visualisation 2 comprend la visière mobile 9, qui peut être, à titre d'exemple indicatif, une visière solaire.

Lorsque le support crânien 4 est un casque, comme représenté en figure 9, et afin d'associer la visière mobile 9 contre le dispositif d'affichage 6, la visière mobile 9 comprend une platine 92 permettant une fixation contre l'interface de fixation de support de jumelles 61 de manière similaire à la fixation des jumelles 7 de sorte à assurer un maintien mécanique de la visière mobile 9 contre le dispositif d'affichage 6.

La visière mobile 9 peut également comprendre un pivot de visière 94 permettant d'induire une rotation de la visière mobile 9 parallèle par rapport à l'axe transversal A3 de sorte à retirer la visière mobile 9 du champ visuel de l'opérateur. Cette rotation présente également l'avantage de permettre la rotation du dispositif d'affichage 6 selon le deuxième axe A2.

En outre, lorsque le support crânien 4 est un bandeau ou un serre-tête, la platine 92 n'est pas adaptée à la fixation de la visière mobile 9 contre le serre-tête 4. Dès lors, le dispositif d'affichage 6 comprend un premier pôle d'aimants 600 et la visière mobile 9 comprend un deuxième pôle d'aimants 900 complémentaire du premier pôle d'aimants 600. Le premier pôle d'aimants 600 et le deuxième pôle d'aimants 900 sont magnétiquement connectés de sorte à maintenir la visière mobile 9 en contact du dispositif d'affichage 6. Le premier pôle d'aimants 600 et le deuxième pôle d'aimants 900 suffisent à la fixation de la visière mobile 9 contre un bandeau ou un serre-tête.

Lorsque le support crânien 4 est un casque, la distance entre le premier pôle d'aimants 600 et le deuxième pôle d'aimants 900 augmente, ce qui nuit au maintien magnétique de la visière mobile 9 et impose la fixation par l'intermédiaire de la platine 92.

La visière mobile comprenant, d'une part le deuxième pôle d'aimant 900 et d'autre part la platine 92 présente ainsi l'avantage d'être adaptée pour être fixée à n'importe quel support crânien 4 cité précédemment.

L'invention s'adresse également aux opérateurs de type SAMU ou offshore qui ont besoin d'un viseur-visuel pour des missions habituelles et qui parfois ont besoin de jumelles à vision nocturne. Le dispositif pouvant se monter sur un bandeau ou sur un casque, le dispositif permet d'acquérir un unique système. On dit alors que le système de visualisation est attaché à l'avion ou l'hélicoptère et que le bandeau et le casque appartiennent au pilote. Le pilote choisit son « support crânien » avant le vol en fonction de sa mission.

Ce deuxième avantage de l'invention justifie en particulier la visière commune présentée en figure 9. Le pilote dispose d'une visière et d'un dispositif de visualisation qu'il peut utiliser avec un bandeau ou un casque avec ou sans jumelles de vision nocturne.

Ainsi l'invention présente donc un dispositif d'affichage 6 détachable permettant d'associer le dispositif d'affichage 6, des jumelles 7 ou encore une visière mobile 9, à une pluralité de supports crâniens tels qu'un casque de protection, un bandeau ou encore un serre-tête rigide. L'ensemble du système de visualisation présente ainsi l'avantage d'être interchangeable et adapté à toute situation de surveillance en vol et de réduire la fatigue de l'opérateur liée à l'utilisation de différents systèmes, l'utilisation parfois de systèmes massifs.

## Revendications

1. Système de visualisation (2) destiné à coopérer avec un support crânien (4), ledit système de visualisation (2) comprenant :
- un dispositif d'affichage (6) détachable, comprenant :
∘ un combineur (60), disposé devant un œil (8) de l'utilisateur, apte à présenter des informations en superposition avec une vision extérieure,
le système de visualisation (2) comprenant une interface de montage amovible (10), **caractérisé en ce que** : ladite interface de montage amovible (10) est configurée pour associer le dispositif d'affichage (6) alternativement à une pluralité de supports crâniens (4) parmi au moins un casque, un bandeau et un arceau serre-tête,
le dispositif d'affichage (6) détachable comprenant une interface de fixation de support de jumelles (61), le système de visualisation (2) comprenant des jumelles (7) détachables, les jumelles (7) comprenant un support de jumelles (71), apte à être fixé contre le dispositif d'affichage (6) par association mécanique de l'interface de fixation de support de jumelles (61) et du support de jumelles (71) de sorte à ce que le dispositif d'affichage (6) se trouve entre l'œil (8) de l'utilisateur et les jumelles (7).

2. Système de visualisation (2) selon l'une des revendications 1, dans lequel l'interface de montage amovible (10) comprend :
- un premier système de fixation (100) monté sur l'interface de montage amovible (10),
- un deuxième système de fixation (40) complémentaire du premier système de fixation (100), monté sur le support crânien (4),
le premier système de fixation (100) étant configuré pour être associé avec le deuxième système de fixation (40) de sorte à encastrer le premier système de fixation (100).

3. Système de visualisation (2) selon la revendication 2, dans lequel le premier système de fixation (100) comprend un système de glissière (100') et le deuxième système de fixation (40) comprend une rainure en T (40').

4. Système de visualisation (2) selon la revendication 3, dans lequel le système de glissière (100') comprend un dispositif de crantage (110') et dans lequel la rainure en T (40') comprend un système de poussoir à billes.

5. Système de visualisation (2) selon les revendications 3 ou 4, dans lequel la rainure en T (40') est mobile en rotation selon un axe transversal (A3) dont une composante est perpendiculaire à un champ visuel de l'utilisateur.

6. Système de visualisation (2) selon l'une des revendications 2 à 4, dans lequel le deuxième système de fixation (40) est mobile en rotation selon un deuxième axe (A2) parallèle au champ visuel de l'utilisateur.

7. Système de visualisation (2) selon l'une des revendications 1 à 6, destiné à être associé à un casque, le casque comprenant une plaque d'adaptation connectée au deuxième système de fixation (40) et à l'interface de fixation de support de jumelles (61), le dispositif d'affichage (6) et les jumelles (7) étant mobiles en translation par rapport à la plaque d'adaptation du casque selon un axe vertical (A1) perpendiculaire à l'axe transversal (A3) et au deuxième axe de champ visuel (A2).

8. Système de visualisation (2) selon la revendication 1, le dispositif d'affichage (6) comprenant un premier pôle d'aimants (600), le système de visualisation (2) comprenant une visière mobile (9), la visière mobile (9) comprenant un deuxième pôle d'aimants (900) complémentaire du premier pôle d'aimants (600), magnétiquement connecté au premier pôle d'aimants (600) de sorte à maintenir la visière mobile (9) en contact du dispositif d'affichage (6).

9. Système de visualisation (2) selon la revendication 8, dans lequel l'interface de montage amovible (10) comprend :
- un premier système de fixation (100) monté sur l'interface de montage amovible (10),
- un deuxième système de fixation (40) complémentaire du premier système de fixation (100), destiné à être monté sur le support crânien (4),
le premier système de fixation (100) étant configuré pour être associé avec le deuxième système de fixation (40) de sorte à encastrer le premier système de fixation (100),
le système de visualisation (2) étant destiné à être associé à un casque, le casque comprenant une plaque d'adaptation connectée au deuxième système de fixation (100) du dispositif d'affichage (6), la visière amovible (9) comprenant une platine de fixation (92) connectée à la plaque d'adaptation du casque.

10. Système de visualisation (2) selon l'une des revendications 1 à 7, dans lequel les jumelles (7) sont des jumelles de vision de nuit comportant deux corps identiques, chaque corps comportant un oculaire (72).

11. Système de visualisation (2) selon l'une des revendications précédentes, dans lequel le dispositif d'affichage (6) comprend un écran plat d'affichage, sa source d'éclairage, une optique de collimation (62) et un combineur optique à expansion de pupille (60).

## Patentansprüche

1. Visualisierungssystem (2) zum Zusammenwirken mit einem Schädelträger (4), wobei das Visualisierungssystem (2) umfasst:
- eine lösbare Anzeigevorrichtung (6), umfassend:
- einen Kombinierer (60), der vor einem Auge (8) des Benutzers angeordnet ist und in der Lage ist, Informationen überlagert mit einer Außenansicht darzustellen,
wobei das Visualisierungssystem (2) eine abnehmbare Montageschnittstelle (10) umfasst, **dadurch gekennzeichnet, dass**: die abnehmbare Montageschnittstelle (10) dazu konfiguriert ist, die Anzeigevorrichtung (6) abwechselnd mit einer Vielzahl von Schädelträgern (4) aus mindestens einem Helm, einem Stirnband und einem Kopfbügel zu verbinden,
wobei die lösbare Anzeigevorrichtung (6) eine Fernglasträger-Befestigungsschnittstelle (61) umfasst, wobei das Visualisierungssystem (2) ein lösbares Fernglas (7) umfasst, wobei das Fernglas (7) einen Fernglasträger (71) umfasst, der in der Lage ist, an der Anzeigevorrichtung (6) durch mechanische Verbindung der Fernglasträger-Befestigungsschnittstelle (61) und des Fernglasträgers (71) befestigt zu werden, so dass sich die Anzeigevorrichtung (6) zwischen dem Auge (8) des Benutzers und dem Fernglas (7) befindet.

2. Visualisierungssystem (2) nach Anspruch 1, wobei die abnehmbare Montageschnittstelle (10) umfasst:
- ein erstes Befestigungssystem (100), das auf der abnehmbaren Montageschnittstelle (10) montiert ist,
- ein zweites Befestigungssystem (40), das komplementär zum ersten Befestigungssystem (100) ist, das auf dem Schädelträger (4) montiert ist,
wobei das erste Befestigungssystem (100) dazu konfiguriert ist, mit dem zweiten Befestigungssystem (40) so verbunden zu werden, dass das erste Befestigungssystem (100) eingebettet wird.

3. Visualisierungssystem (2) nach Anspruch 2, wobei das erste Befestigungssystem (100) ein Gleitführungssystem (100') umfasst und das zweite Befestigungssystem (40) eine T-Nut (40') umfasst.

4. Visualisierungssystem (2) nach Anspruch 3, wobei das Gleitführungssystem (100') eine Rastvorrichtung (110') umfasst und wobei die T-Nut (40') ein Kugeldrückersystem umfasst.

5. Visualisierungssystem (2) nach Anspruch 3 oder 4, wobei die T-Nut (40') um eine Querachse (A3) drehbeweglich ist, deren eine Komponente senkrecht zu einem Sichtfeld des Benutzers steht.

6. Visualisierungssystem (2) nach einem der Ansprüche 2 bis 4, wobei das zweite Befestigungssystem (40) um eine zweite Achse (A2) parallel zum Sichtfeld des Benutzers drehbeweglich ist.

7. Visualisierungssystem (2) nach einem der Ansprüche 1 bis 6, das dazu bestimmt ist, mit einem Helm verbunden zu werden, wobei der Helm eine Anpassungsplatte umfasst, die mit dem zweiten Befestigungssystem (40) und der Fernglasträger-Befestigungsschnittstelle (61) verbunden ist, wobei die Anzeigevorrichtung (6) und das Fernglas (7) in Bezug auf die Anpassungsplatte des Helms entlang einer vertikalen Achse (A1) senkrecht zur Querachse (A3) und zur zweiten Sichtfeldachse (A2) translatorisch beweglich sind.

8. Visualisierungssystem (2) nach Anspruch 1, wobei die Anzeigevorrichtung (6) einen ersten Magnetpol (600) umfasst, wobei das Visualisierungssystem (2) ein bewegliches Visier (9) umfasst, wobei das bewegliche Visier (9) einen zweiten Magnetpol (900) umfasst, der zum ersten Magnetpol (600) komplementär ist, der magnetisch mit dem ersten Magnetpol (600) verbunden ist, um das bewegliche Visier (9) in Kontakt mit der Anzeigevorrichtung (6) zu halten.

9. Visualisierungssystem (2) nach Anspruch 8, wobei die abnehmbare Montageschnittstelle (10) umfasst:
- ein erstes Befestigungssystem (100), das auf der abnehmbaren Montageschnittstelle (10) montiert ist,
- ein zweites Befestigungssystem (40), das komplementär zum ersten Befestigungssystem (100) ist, das zur Montage auf dem Schädelträger (4) bestimmt ist,
wobei das erste Befestigungssystem (100) dazu konfiguriert ist, mit dem zweiten Befestigungssystem (40) so verbunden zu werden, dass das erste Befestigungssystem (100) eingebettet wird,
wobei das Visualisierungssystem (2) dazu bestimmt ist, mit einem Helm verbunden zu werden, wobei der Helm eine Anpassungsplatte umfasst, die mit dem zweiten Befestigungssystem (100) der Anzeigevorrichtung (6) verbunden ist, wobei das abnehmbare Visier (9) eine Befestigungsplatte (92) umfasst, die mit der Anpassungsplatte des Helms verbunden ist.

10. Visualisierungssystem (2) nach einem der Ansprüche 1 bis 7, wobei das Fernglas (7) ein Nachtsichtfernglas ist, das zwei identische Körper umfasst, wobei jeder Körper ein Okular (72) umfasst.

11. Visualisierungssystem (2) nach einem der vorstehenden Ansprüche, wobei die Anzeigevorrichtung (6) einen Anzeigeflachbildschirm, dessen Beleuchtungsquelle, eine Kollimationsoptik (62) und einen optischen Pupillenerweiterungskombinierer (60) umfasst.

## Claims

1. Viewing system (2) intended to engage with a cranial support (4), said viewing system (2) comprising:
- a detachable display device (6), comprising:
- a combiner (60), disposed in front of an eye (8) of the user, capable of having information superposed with an external vision,
the viewing system (2) comprising a removable mounting interface (10), **characterised in that**: said removable mounting interface (10) is configured to associate the display device (6) alternatively with a plurality of cranial supports (4) from among at least one helmet, one band, and one headband,
the detachable display device (6) comprising a binocular support fixing interface (61), the viewing system (2) comprising detachable binoculars (7), the binoculars (7) comprising a binocular support (71), capable of being fixed against the display device (6) by mechanical association of the binocular support fixing interface (61) and of the binocular support (71), such that the display device (6) is located between the eye (8) of the user and the binoculars (7).

2. Viewing system (2) according to claim 1, wherein the removable mounting interface (10) comprises:
- a first fixing system (100) mounted on the removable mounting interface (10),
- a second fixing system (40) complementary to the first fixing system (100), mounted on the cranial support (4),
the first fixing system (100) being configured to be associated with the second fixing system (40), so as to embed the first fixing system (100).

3. Viewing system (2) according to claim 2, wherein the first fixing system (100) comprises a slide system (100') and the second fixing system (40) comprises a T-shaped groove (40').

4. Viewing system (2) according to claim 3, wherein the slide system (100') comprises a notching device (110'), and wherein the T-shaped groove (40') comprises a ball pushbutton system.

5. Viewing system (2) according to claims 3 or 4, wherein the T-shaped groove (40') is rotatably movable along a transverse axis (A3), a component of which is perpendicular to a viewing field of the user.

6. Viewing system (2) according to any one of claims 2 to 4, wherein the second fixing system (40) is rotatably movable along a second axis (A2) parallel to the viewing field of the user.

7. Viewing system (2) according to any one of claims 1 to 6, intended to be associated with a helmet, the helmet comprising an adaptation plate connected to the second fixing system (40) and to the binocular support fixing interface (61), the display device (6) and the binoculars (7) being translatably movable with respect to the adaptation plate of the helmet along a vertical axis (A1) perpendicular to the transverse axis (A3) and to the second viewing field axis (A2).

8. Viewing system (2) according to claim 1, the display device (6) comprising a first magnet pole (600), the viewing system (2) comprising a movable visor (9), the movable visor (9) comprising a second magnet pole (900) complementary to the first magnet pole (600), magnetically connected to the first magnet pole (600), so as to keep the movable visor (9) in contact with the display device (6).

9. Viewing system (2) according to claim 8, wherein the removable mounting interface (10) comprises:
- a first fixing system (100) mounted on the removable mounting interface (10),
- a second fixing system (40) complementary to the first fixing system (100), intended to be mounted on the cranial support (4),
the first fixing system (100) being configured to be associated with the second fixing system (40), so as to embed the first fixing system (100),
the viewing system (2) being intended to be associated with a helmet, the helmet comprising an adaptation plate connected to the second fixing system (100) of the display device (6), the movable visor (9) comprising a fixing plate (92) connected to the adaptation plate of the helmet.

10. Viewing system (2) according to any one of claims 1 to 7, wherein the binoculars (7) are night vision binoculars comprising two identical bodies, each body comprising an eye (72).

11. Viewing system (2) according to any one of the preceding claims, wherein the display device (6) comprises a flat display screen, its lighting source, collimating optics (62) and a pupil-expanding optical combiner (60).
